# EUROPÄISCHE PATENTANMELDUNG

(11) **EP 2 975 368 A1**
(43) Veröffentlichungstag der Anmeldung: **20.01.2016**
(21) Anmeldenummer: 15401075.5
(22) Anmeldetag: 20.07.2015
(51) Int. Cl.: G01G 19/08, G07C 5/00, G01S 19/00, G05B 19/418

(54) **VERFAHREN ZUR AUTOMATISIERUNG EINES PROZESSES BEI BAUMASCHINEN UND BAUGERÄTEN SOWIE NUTZFAHRZEUGEN ZUM TRANSPORT VON STÜCK- UND/ODER SCHÜTTGÜTERN**

(30) Priorität: 18.07.2014 DE 102014110121
(71) Anmelder: Herzog, Andre, 03048 Cottbus (DE); Tiefenbacher GmbH, 2542 Kottingbrunn (AT)
(72) Erfinder: Herzog, Andre, 03048 Cottbus (DE); Tiefenbacher, Josef, 2542 Kottingbrunn (AT)
(74) Vertreter: Haschick, Gerald

(57) **Zusammenfassung**

Die Erfindung betrifft ein Verfahren zur Automatisierung eines Prozesses bei Baumaschinen und Baugeräten sowie Nutzfahrzeugen zum Transport von Stück- und/oder Schüttgütern, wobei mobile Messeinrichtungen verwendet werden, um den Automatisierungsprozess zu leiten.

## Beschreibung

Die Erfindung betrifft ein Verfahren zur Automatisierung eines Prozesses bei Baumaschinen und Baugeräten sowie Nutzfahrzeugen zum Transport von Stück- und/oder Schüttgütern, wobei mobile Messeinrichtungen verwendet werden, um den Automatisierungsprozess zu leiten.

Dabei sind aus dem Stand der Technik allgemeine Verfahren und Vorrichtungen unter den Begriffen stationäre und transportable Fahrzeuge zur Gewichtsbestimmung an Radladern, Kränen, Bagger usw. bekannt.

Ziel der Erfindung ist es, einen Automatisierungsprozess bei Baumaschinen und Baugeräten sowie Nutzfahrzeugen zum Transport von Stück- und/oder Schüttgütern einzuführen, um aus ökonomischer Sicht einen abrechenbaren Prozess zu erhalten.

Die Aufgabe der Erfindung ist es, ein Verfahren zur Automatisierung eines Prozesses bei Baumaschinen und Baugeräten sowie Nutzfahrzeugen zum Transport von Stück- und/oder Schüttgütern zu finden, wobei durch den Automatisierungsprozess eine Dokumentierung und ein Eingriff in die Prozesssteuerung durchgeführt wird.

Die Aufgabe wird erfindungsgemäß durch den Patentanspruch 1 und seinen Unteransprüchen gelöst.

Dabei wurde ein Verfahren zur Automatisierung eines Prozesses zum permanenten mobilen Wiegen von Massen bei Baumaschinen und Baugeräten sowie Nutzfahrzeugen zum Transport von Stück- und/oder Schüttgütern so entwickelt,
- dass über ein prozessgeführtes Leitsystem, welches Ist- und Sollwerte verarbeitet und auswertet und prozessgeführt einzelne Verfahrensabläufe signalgesteuert ausführt, folgende Verfahrensabläufe zur Automatisierung verarbeitet werden
   - eine Georeferenzierung via GPS
   - eine dazugehörige zeitliche Kodierung
   - Ermittlung von mobilen Wiegemessdaten von Stück- und/oder Schüttgutmassen, welche mit den Baumaschinen und Baugeräten sowie Nutzfahrzeugen zum Transportieren von Stück- und/oder Schüttgütern bewegt werden,
   im Zusammenhang mit einem zentralen Regelungsprozess für die Verfahrensabläufe und eine Einbringung einer Steuerungs- und Regeltechnik von Baumaschinen und Baugeräten sowie Nutzfahrzeugen zum Transport von Stück- und/oder Schüttgütern in einen automatisierten Prozess stattfindet,
- dass ein mobiles georeferenziertes Wiegen mit einer entsprechenden zeitlichen Kodierung von Stück- und/oder Schüttgütern aller Art in Intervallen < 15 Minuten ausgeführt wird,
- dass eine getriggerte automatische Datenfernübertragung von georeferenzierten Wiegemessdaten bei Aufenthalt und Erreichung eines definierten Bereiches ausgeführt wird.

Nachfolgend wird eine allgemeine Verfahrensbeschreibung durchgeführt. Für die Bezeichnung "mobiles georeferenziertes Wiegen" steht die Abkürzung MGW.

Es wird ein Verfahren zur Automatisierung des Wiegeprozesses für mobile Messeinrichtungen zum permanenten Wiegen von Massen und deren gleichzeitige Georeferenzierung ausgeführt.
- Unter Georeferenzierung wird in diesem Zusammenhang die Zuweisung von raumbezogenen Informationen (der Georeferenz) zu einem Datensatz (hier die Wiegemesswerte) verstanden.
- Massen stehen im Zusammenhang mit diesem Verfahren für Stück-/Schüttgüter und Flüssigkeiten aller Art.
- Gleichzeitig bzw. permanent bedeuten im Zusammenhang mit diesem Verfahren Messung und Messwertaufzeichnung / Messwertspeicherung in Intervallen < 15 Minuten.

Das Verfahren beinhaltet die Automatisierung der bis dato separat durchgeführten Einzelprozesse des Wiegens von Massen, der Georeferenzierung, des Materialtransportes und der Messdaten-Verknüpfung bzw. -Dokumentation.

Folgende organisatorische Parameter beeinflussen hierbei im Besonderen die Notwendigkeit des Verfahrens:
- Bergbaugesetzgebung (Nachweispflichten zur Verbringung von gewachsenen Gebirgsmassen),
- Unfallverhütungsvorschriften,
- allgemeine Dokumentation transportierter Massen (Datum, Gewicht etc.),
- Georeferenzierung der transportierten Massen,
- zeitnahe Datenerfassung und Datenverarbeitung im Rahmen einer übergeordneten Prozessautomation in Echtzeit.

Der Mangel, das Problem liegt im Speziellen in der technisch komplexen, kostenintensiven und gleichzeitig stattfindenden Durchführung der fünf Einzelaufgaben:
1. das Wiegen,
2. die Georeferenzierung,
3. das Laden / Abladen, der Transport,
4. die Abrechnung und Dokumentation,
5. die automatische Erzeugung von definierten, prozessbezogenen, digitalen Datensätzen.

Das Problem wird dadurch verstärkt, dass schon bei kurzzeitiger, gleichzeitiger Anwendung der oben genannten fünf Einzelaufgaben, ein immenser zeitlicher Bearbeitungs-/Kontrollaufwand anfällt. Während des Arbeits- bzw. Transportvorganges ist die gleichzeitige manuelle Be- und Verarbeitung dieser Einzelaufgaben für einen Gerätebediener kaum durchführbar und stellt in jedem Fall ein Sicherheitsrisiko während der Transportfahrt dar.

Weiterhin ist es ein Problem, dass für eine Vielzahl von innerbetrieblichen Arbeitsprozessen zum Massenumschlag wenige oder keine Fahrzeugwaagen zur Verfügung stehen.

Ebenfalls stellt in der Praxis der Umweg zu einer festinstallierten oder transportablen Fahrzeugwaage oft einen Zeitaufwand dar, der gegebenenfalls durch die Überschneidung mit anderen Prozessen eine weitere Verzögerung bewirkt (Flaschenhalseffekt). Mit längeren Fahrstrecken und dadurch längeren Betriebszeiten steigt in der Regel auch das Unfallrisiko für Mensch, Maschine und Arbeitsprozess.

Ferner stellen Fahrzeugwaagen immer eine zusätzliche Investition neben den vorhandenen Massentransport- bzw. Massenumschlagsgeräten dar. Dies wird besonders kritisch bei Betriebsprozessen mit einem hohen Anteil an Massenumschlagstätigkeiten mit kurzfristig ortsveränderlichen Wirkungsstätten, die sich über große Betriebsflächen erstecken (zum Beispiel Schüttgutlager, Hafenanlagen etc.) oder sich fernab urbaner Infrastruktur befinden (zum Beispiel Tiefbaugewerbe, Infrastrukturbau etc.). Im Zusammenhang mit hoher Ortsveränderlichkeit und unerschlossenem Gelände ist eine genaue Nachweisführung zu getätigten Massenbewegungen bzw. - transporten bis dato recht aufwendig, relativ teuer und nur in sporadischen Intervallen möglich.

Ein weiterer Punkt sind spezielle Arbeitsprozesse, die im Zuge behördlicher Nachweisverpflichtungen auf eine detaillierte Massen-Ermittlung und - Dokumentation an vorbestimmten Geländepunkten angewiesen sind. Für diese zu erfassenden Arbeitsprozesse gibt es bis dato keine Systemlösung bei den entsprechenden Anwendungsbeispielen.

Das Verfahren des MGW vereint die folgenden Hauptmerkmale:
1. die Mobilität des jeweiligen massenbewegenden Trägergerätes (der Radlader, die Laderaupe, der Bagger, der Lastkraftwagen oder Schwerkraftwagen),
2. die Fähigkeit zur Ermittlung und zur Abrechnung des Gewichts, vergleichbar mit einer festinstallierten oder transportablen Fahrzeugwaage,
3. die Erfassung und Zuweisung einer entsprechenden Georeferenzierung und einer Zeit- bzw. Datumsinformation zu den jeweiligen gewogenen Massen,
4. die automatische Erzeugung von prozessbezogenen digitalen Datensätzen nach vorbestimmter Programmierung.

Das Verfahren lässt sich dabei methodisch:
- als in sich geschlossenes Messsystem mit Datenausgabe
- oder als offenes Messsystem über eine Schnittstelle zur OEM-Gerätesteuerung des jeweiligen Geräteherstellers realisieren.

Das MGW kann theoretisch bei allen Gerätegruppen werkseitig vorinstalliert oder in den jeweiligen Bestandsgeräten nachgerüstet werden.

Die praktische Ausführung der Erfindung des MGW lässt sich technisch realisieren, indem über ein prozessgeführtes Leitsystem, welches Ist- und Sollwerte verarbeitet und auswertet und prozessgeführt einzelne Verfahrensabläufe signalgesteuert ausführt, folgende Verfahrensabläufe zur Automatisierung verarbeitet werden:
- eine Georeferenzierung des Gerätestandortes via GPS,
- eine Gewichtsmesseinrichtung,
- ein Prozesscomputer,
- ein Datenspeicher,
- eine Prozessregelsoftware,
- gegebenenfalls eine Kommunikationsschnittstelle für ein Datentransfer direkt am Gerät,
- gegebenenfalls eine Kommunikationsschnittstelle für eine Datenfernübertragung (DFÜ),
- gegebenenfalls eine Steuer- und Kontrolleinheit für den Gerätebediener (für Alarmierung, Steuerung, Kontrolle, Arbeitsvorbereitung, Abrechnung etc.),
- gegebenenfalls eine Steuer- und Kontrolleinheit im Leitstand (für Alarmierung, Steuerung, Kontrolle, Arbeitsvorbereitung, Abrechnung etc.).

Das Verfahren zum mobilen Wiegen besteht dazu aus der folgenden Anordnung:
1. aus einem Sensor (oder einer Sensorenanordnung) zur direkten oder indirekten Gewichtsmessung (Wirkprinzip beliebig),
2. aus Einrichtungen, die ein sogenanntes GPS-Tracking ermöglichen (Georeferenzierung),
3. aus einem Datenlogger zur Speicherung der Gewichtsmessungen und der Georeferenzdaten,
4. aus einem Prozessrechner mit entsprechender Software zur Zusammenführung und Regelung der Prozessdaten,
5. optional aus einer Sende- und Empfangseinheit für die permanente oder getriggerte Datenfernübertragung,
6. optional aus einer Bedienerkonsole mit Bildschirm (HMI "Human-Maschine-Interface") für die Überwachung und gegebenenfalls Korrektursteuerung auf der Maschine,
7. optional aus einer Bedienerkonsole oder PC für die Überwachung und gegebenenfalls Korrektursteuerung an einem Arbeitsplatz in der Leitstelle (zum Beispiel Dispatcherzentrale).

Die mit dieser Erfindung erzielten Vorteile sind:
1. Der Betriebsablauf benötigt keine Unterbrechung mehr für Wiegemanöver des Gerätes an einem bestimmten Punkt (üblicherweise auf einer festeingebauten Fahrzeugwaage). Dosierung und gleichzeitiges Wiegen bzw. Erkennen von Sorten erfolgt während des normalen Massen-/Materialumschlages. Kürzere Wege bedeuten Zeiteinsparung, dadurch Minimierung des Verbrauches von Energie- bzw. Betriebsstoffen und Senkung des Geräteverschleißes.
2. Weitere Senkung der innerbetrieblichen Bearbeitungszeiten durch die automatische Massen-, Sorten- bzw. Stundenabrechnung. Die betriebswirtschaftliche Abrechnung kann automatisiert aufbereitet und rapportiert werden.
3. Die Aufnahme und Abgabe von unterschiedlichen Sorten bzw. Massen lässt sich mit der Georeferenzierung punktgenau protokollieren. Dadurch Steigerung der Prozessqualität durch permanente Kontrolle und Dokumentation der jeweiligen Einwaage, des Aufnahme- und Abgabestandortes bzw. der Transportwege. Dadurch Senkung von Fehlmessungen, Senkung von Falschaufnahme- bzw. -abgabe (Verbesserung des Soll-/Ist-Vergleichs).
4. Steigerung der Betriebssicherheit; die georeferenzierten Wiegemessdaten werden automatisch aufgenommen und lassen sich ebenfalls automatisch abrufen bzw. an den übergeordneten Prozessleitstand senden. Der Gerätebediener ist von der Bedienung des Messvorgangs befreit (Entlastung des Gerätebedieners = Steigerung der Betriebssicherheit).
5. Höherer qualitativer Grad der Arbeit durch weitgehend automatische Kontrolle von Soll-/ Istvorgaben bzw. durch das Erkennen von Sorten.

Nachfolgend ist das erfinderische Verfahren an einem Ausführungsbeispiel und den entsprechenden Zeichnungen dokumentiert.

Dabei zeigen:
- Figur 1: Schüttguttransport
- Figur 2: Blockschaltbild MGW-Regelsystem
- Figur 3: Blockschaltbild MGW-Regelsystem und Leitstelle
- Figur 4: Blockschaltbild Signalflussplan
- Figur 5: schematische Arbeitsweise der Automatisierungstechnologie
- Figur 6: Gerätedarstellung Radlader
- Figur 7: Darstellung Planierraupe
- Figur 8: Darstellung Überkopflader
- Figur 9: Signalflussplan der Verfahrenslösung
- Figur 10: Anordnung der Sensoren an einem Radlader

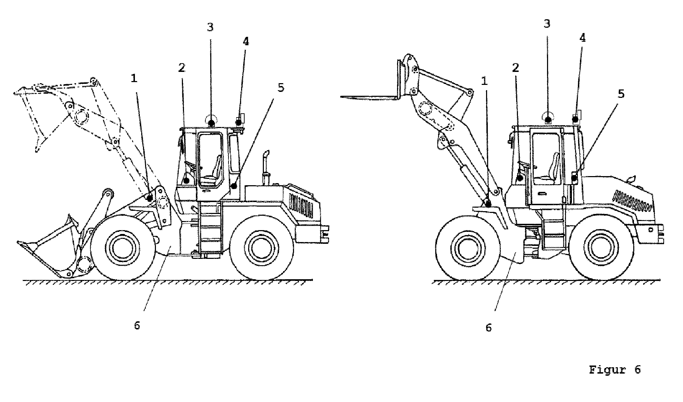

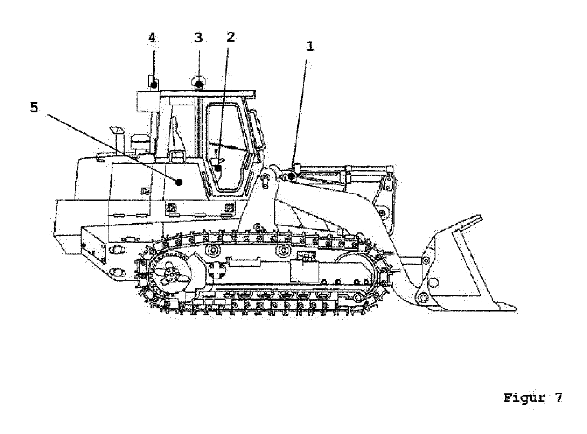

In den Figuren 6, 7 und 8 sind Ausführungsbeispiele gegeben, wo Radlader, Planierraupe oder Überkopflader mit den entsprechenden Sensoreinrichtungen versehen sind.

Dabei ist ein Gewichtsmesssensor 1 vorzugsweise in Verbindung mit der Hydraulikanlage des jeweiligen Trägergerätes bzw. Fahrzeuges verbunden.

Für den Gewichtsmesssensor 1, auch Kraftaufnehmer genannt, eignen sich alle direkten Kraftsensorprinzipien wie zum Beispiel:
- Federkörper-Kraftaufnehmer
- Kapazitive-Kraftaufnehmer
- Piezoelektrischer Sensor
- Piezoresistiver Sensor
- Magnetoelastischer Sensor
oder auch alle indirekten Kraftsensorprinzipien wie zum Beispiel:
- Schwingsaiten-Kraftsensoren
- DMS-Kraftsensoren
- Induktive Kraftsensoren

Des Weiteren ist eine Bedienkonsole 2 im Fahrercockpit gegeben. Auf dem Dach des jeweiligen Fahrzeuges sind ein GPS-Sensor mit Antenne 3 und eine DFÜ-Sende- und Empfangseinheit 4 vorhanden. Das MGW-Regelsystem 5 ist je nach Ausführungsart des Fahrzeuges in der Steuerungstechnik oder Prozessleittechnik eingefügt.

Grundsätzlich kann davon ausgegangen werden, dass sämtliche Baumaschinen und Baugeräte sowie Nutzfahrzeuge zum Transport von Stück- oder Schüttgut mit diesen fünf wesentlichen Ausrüstungspunkten, Messsensoren sowie Datenübertragungssensoren ausgestattet werden. Es ist also möglich, sämtliche Standbagger, Fahrbagger, Flachbagger, Transportgeräte, Hebezeuge, Seilbagger und Seilkräne, Portalkräne, sonstige Kräne, Flurförderfahrzeuge aller Art, ortsveränderliche Vorrichtungen zur Schüttgutmasseneinbringung - insbesondere Trichter, Schüttgerüste, Kompaktsilos - sowie mobile Brechmaschinen aller Art mit dem Gewichtsmesssensor 1, der Bedienkonsole Cockpit 2, dem GPS-Sensor mit Antenne 3, der DFÜ-Sende- und Empfangseinheit 4 und dem MGW-Regelsystem 5 auszurüsten bzw. nachzurüsten.

Es wird damit erreicht, dass die erfindungsgemäßen Automatisierungsverfahren für diese sämtlichen Gerätesysteme ausgeführt werden können.

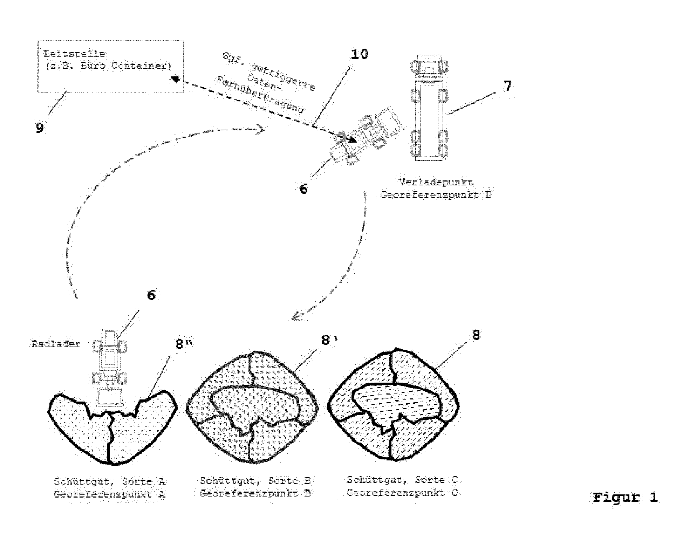

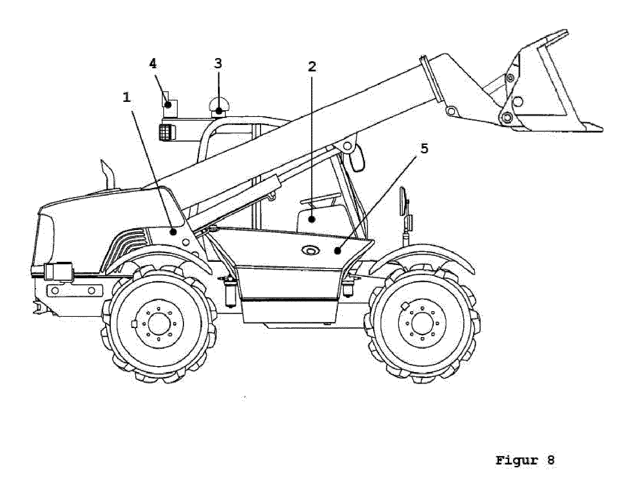

In der Figur 1 ist eine erfindungsmäßige Lösung gegeben. Dabei ist ein Radlader 6, wie aus der Figur 8 ersichtlich, mit den entsprechenden Sensoren und Datenfernübertragungseinrichtungen versehen. Dieser Radlader 6 ist zwischen einem Verladepunkt 7 und dem Schüttgut 8 zur Beladung des Verladepunktes 7 unterwegs. Über den Gewichtsmesssensor 1 wird die Masse des Schüttgutes 8 erfasst und mit Hilfe des GPS-Sensors mit Antenne 3 eine Georeferenzierung ausgeführt. Gleichzeitig ist eine zeitliche Kodierung gegeben. Diese Daten werden über die DFÜ-Sende- und Empfangseinheit 4 an eine Leitstelle 9 gesendet. Somit werden alle wesentlichen Messdaten übertragen und gesichert. Über die Bedienkonsole Cockpit 2 kann der Fahrer des Radladers 6 entsprechende Informationen der Leitstelle 9 erhalten, um somit die Optimierung des Prozesses zu generieren.

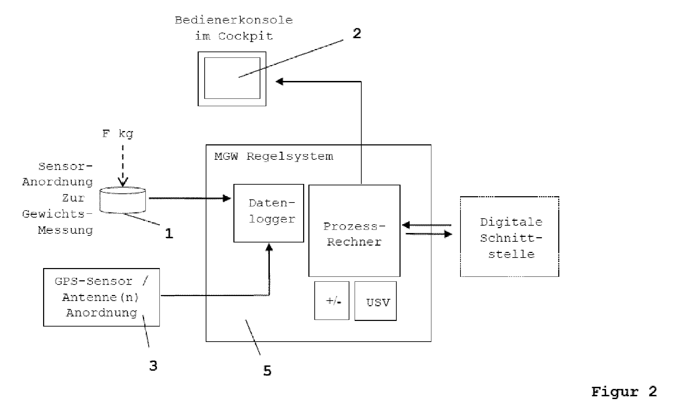

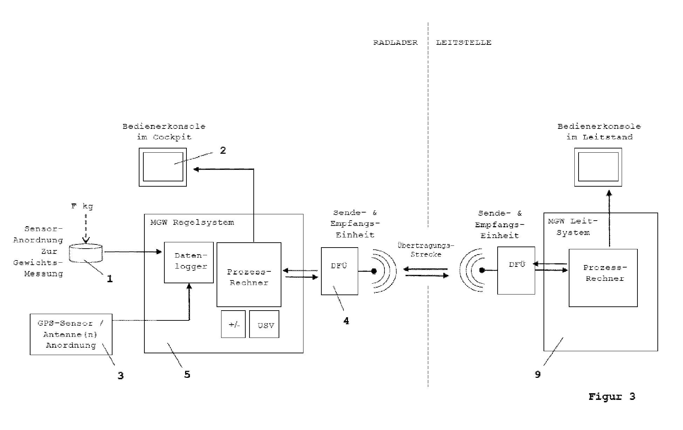

In den Figuren 2 und 3 ist ein Blockschaltbild des MGW-Regelsystems 5 dargestellt. Der Radlader 6 gemäß Figur 8 ist mit dem entsprechenden Gewichtsmesssensor 1, der Bedienkonsole Cockpit 2, dem GPS-Sensor mit Antenne 3 und dem MGW-Regelsystem 5 bestückt. Wie aus dem Blockschaltbild ersichtlich werden die entsprechenden Signalgebungen des Gewichtsmesssensors 1 und des GPS-Sensors mit Antenne 3 in einen Datenlogger des MGW-Regelsystems 5 eingespeist. Dieser Datenlogger ist mit einem Prozessrechner und einer dementsprechenden Spannungsversorgung verbunden und mit einer gegebenen Software bestückt. Der Prozessrechner des MGW-Regelsystems 5 ist verbunden mit der Bedienkonsole Cockpit 2. Weiterhin ist der Prozessrechner des MGW-Regelsystems 5 mit einer digitalen Schnittstelle verbunden. Die eingelesenen Messwerte aus dem Gewichtsmesssensor 1 und dem GPS-Sensors mit Antenne 3 werden in dem Prozessrechner mit einer entsprechenden Zeitcodierung belegt. Die vorhandenen Ergebnisse sind in der Bedienkonsole Cockpit 2 ersichtlich und von Seiten des Fahrers des Radladers 6 steuerbar. Über die digitale Schnittstelle des MGW-Regelsystems 5 werden nun die entsprechenden Daten verarbeitet und gespeichert. Der gleiche Prozess findet in der Figur 3 statt, wobei an dem Prozessrechner des MGW-Regelsystems 5 eine DFÜ-Sende- und Empfangseinheit 4 gegeben ist, welche eine Übertragung der Daten hin zu einer Leitstelle 9 ausführt. Über eine DFÜ-Sende- und Empfangseinheit 4 werden nun die Daten in der Leitstelle 9 empfangen, ausgewertet und notwendigerweise entsprechende Rückinformationen über die jeweiligen DFÜ-Sende- und Empfangseinheiten 4 hin zur Bedienkonsole Cockpit 2 des Radladers 6 übermittelt.

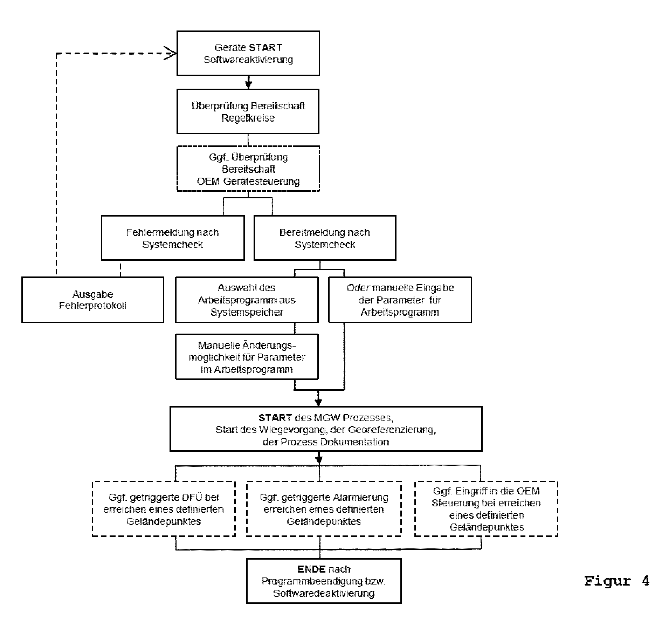

Die schematische Arbeitsweise der Automatisierungstechnologie ist in der Figur 4 dargestellt. Es findet nach einem Gerätestart des Radladers 6 über die Bedienkonsole Cockpit 2 eine Softwareaktualisierung der Betriebssoftware im Automatisierungsprozess statt. Dabei wird ein vorhandenes Fehlerprotokoll als Ausgabe eingearbeitet und die Bereitschaft der Regelkreise der Teilprozesse überprüft. Des Weiteren findet eine Überprüfung der Bereitschaft der OEM-Trägergerätesteuerung statt. Diese Überprüfung findet eine Fehlermeldung oder eine Bereitmeldung nach einem Systemcheck. Nach der Bereitschaftsmeldung wird eine Auswahl des Arbeitsprogrammes aus dem Systemspeicher durchgeführt. Nach der Bereitschaftsmeldung des Systemchecks ist es möglich, eine manuelle Eingabe der Parameter für das Arbeitsprogramm in den MGW-Prozess einzugeben. Parallel dazu sind eine Auswahl des Arbeitsprogrammes aus dem Systemspeicher sowie nachfolgend eine manuelle Änderung der Parameter im Arbeitsprogramm möglich. Nach dem Start des MGW-Prozesses wird der Massewiegevorgang des Stück- oder Schüttgutes aktiviert und die Georeferenzierung über den GPS-Sensor mit Antenne 3 sowie die zeitliche Kodierung parallel zu der Prozessdokumentation durchgeführt. Aus dem MGW-Prozess werden Möglichkeiten gegeben, wie die getriggerte DFÜ, die getriggerte Alarmierung sowie der Eingriff in die OEM-Steuerung beim Erreichen eines definierten Geländepunktes. Der Signalfluss ist nach Programmbeendigung bzw. Softwaredeaktivierung abgeschlossen.

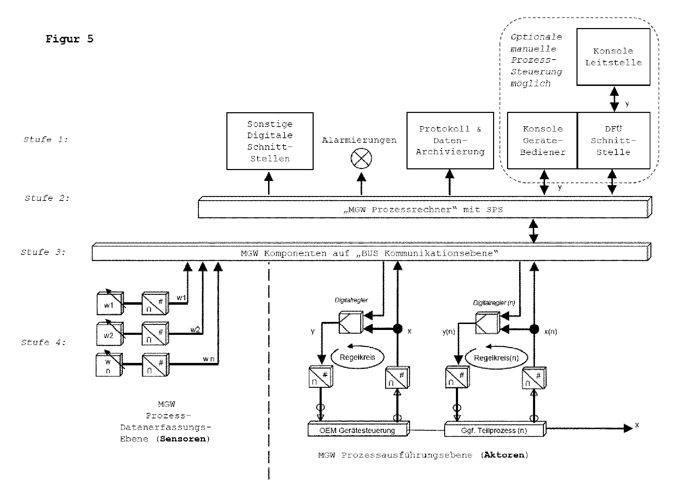

Die Figur 5 zeigt ein Tabellenschema mit einem vierstufigen Aufbau der Prozessregeleinrichtung als Automatisierungstechnik für das MGW-Regelsystem 5. Im Folgenden wird auf die technische Ausführung der vierstufigen, digitalen Automatisierungstechnik näher eingegangen. Die Stufe 1 beinhaltet eine sonstige digitale Schnittstelle, ein Alarmierungssystem, die Protokoll- und Datenarchivierung sowie eine optionale manuelle Prozesssteuerung, in der eine Konsole der Leitstelle, die DFÜ-Schnittstelle sowie eine Konsole des Gerätebedieners enthalten sind. Die Elemente sind verbunden mit der Stufe 2, welche den MGW-Prozessrechner mit SPS beinhaltet. Diese Stufe 2 ist signaltechnisch mit der Stufe 3 verbunden, die die MGW-Komponenten auf einer BUS-Kommunikationsebene verbindet. An diese Stufe 3 ist die Stufe 4 gegeben, welche insbesondere die MGW-Prozess-Datenerfassungsebene ausweist, wo die Wiegedaten, Zeitdaten sowie die GPS-Daten eingegeben werden. Auf der MGW-Prozessausführungsebene der Stufe 4 sind Regelkreise gegeben, welche die entsprechenden Ist- und Sollwerte verarbeiten. Diese Regelkreise in der MGW-Prozessausführungsebene sind signaltechnisch mit der Stufe 3 verbunden sowie mit der Stufe 2 hin zur Stufe 1. Dabei werden in der Stufe 4 Führungsgrößen w in die Stufe 3 MGW-Komponenten auf BUS-Kommunikationsebene eingeführt. Diese Führungsgrößen w sind über den Gewichtsmesssensor 1 und den GPS-Sensor mit Antenne 3 des zeitlichen Intervalls gegeben. Im Regelkreis werden die Regelgröße x und die Stellgröße y definiert und über die Stufen 3 und 2 zur Stufe 1 signaltechnisch weitergeleitet.

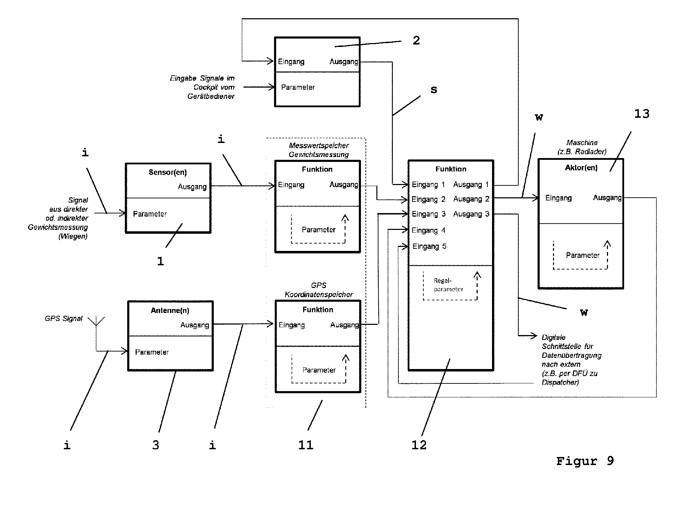

Die Figur 9 zeigt einen Signaldurchlauf der bestehenden Erfindung und den entsprechenden Verfahrensablauf. Dabei wird ein Ist-Wert eines Gewichtes über den Gewichtsmesssensor 1 ermittelt.

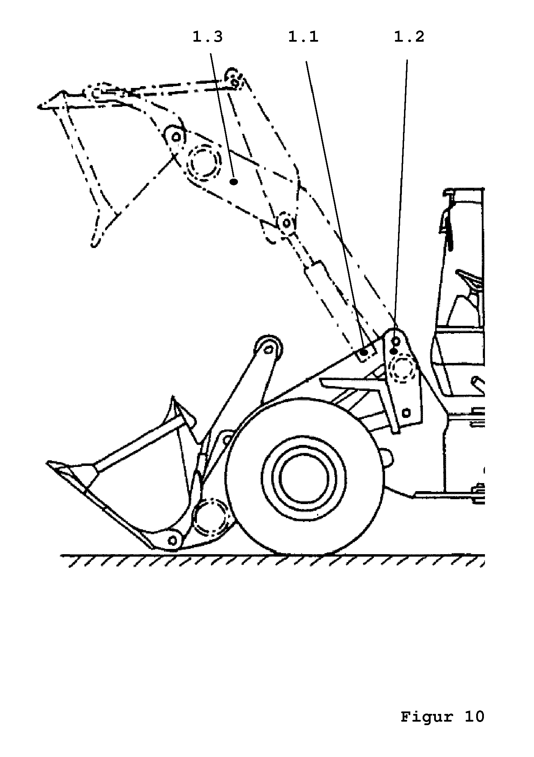

In der Figur 10 ist eine Anordnung möglicher Gewichtssensoren an einem Radlader 6 gegeben. Dabei ist ein Messbereichssensor 1.1 oberhalb eines Hubgerüstes angeordnet und ein zweiter Messbereichssensor 1.2 am Gelenksystem des Hubgerüstes. Mit dieser Anordnung der beiden Messbereichssensoren wird der ideale Stellbereich des Hubgerüstes für die indirekte Gewichtsmessung ermittelt. Dabei wird die Hubkraft am Hydraulikzylinder in eine Gewichtsgröße umgerechnet. Des Weiteren ist ein digitaler Drucksensor 1.3 im Hydraulikzylinder des Radladers 6 gegeben. Dieser wird als Öldruckaufnehmer oder als Abstandsmesser an den Hydraulikzylinderboden und dem Kolben installiert.

Weiterhin wird gemäß Figur 9 ein GPS-Signal empfangen, wobei die Antenne vorteilhafterweise natürlich immer auf dem Dach installiert ist.

Diese beiden Ist-Werte i:
- GPS-Signal und
- direkte oder indirekte Gewichtsmessung an dem entsprechenden Förderelement
werden als digitale Signalgröße in einen Datenlogger 11 eingebracht. Im diesem Datenlogger 11 werden eine Speicherung der Gewichtsmessung sowie eine Speicherung der Koordinatenmessung über GPS ausgeführt. An der Bedienkonsole Cockpit 2 wird eine entsprechende Eingabe des Gerätetreibers ausgeführt. Gleichzeitig kommt ein Eingangssignal aus dem Regelkreis im Prozessrechner 12, welches einen tatsächlichen Wert darstellt. Dieser kann durch den Gerätetreiber korrigiert und als Soll-Wert s in den Prozessrechner 12, welcher einen Regelkreis ausführt, eingegeben werden. Des Weiteren sind Eingangssignale aus dem Datenlogger 11 gegeben, wo die entsprechenden GPS- bzw. Gewichtsmessdaten als Eingangsdaten vorhanden sind. Als weitere Eingangssignale in den Prozessrechner 12, welcher als intelligenter Regler arbeitet, sind die Ausgangsdaten der Maschine 13 sowie die notwendigen Informationen über eine digitale Schnittstelle für eine Datenübertragung gegebenen Dispatchersignale vorhanden.

In dem Prozessrechner 12 wird über eine intelligente Software und vorgegebene Regelparameter eine Regelung der entstehenden Messwerte bzw. Regelung und Steuerung der Signale durchgeführt. Als Führungsgröße w wird ein bestimmtes Steuersignal an die Maschine 13 gegeben. Des Weiteren werden Ausgangssignale an die digitale Schnittstelle und in die Bedienkonsole Cockpit 2 eingeführt.

Erfindungswesentlich ist, dass das Verfahren in der Lage ist, die drei Themenkreise
- dynamisches Wiegen, Gewichtsmessung
- Tracking- und Geofence-Funktionen, Georeferenzierung sowie
- automatischer Eingriff in die Maschinensteuerung, je nach Anwendungsfall
in einen Verfahrenslauf zu integrieren und dynamisch zu bearbeiten. Es werden dabei die Gewichtsdaten zum Zeitpunkt der Messung automatisch mit Geodaten kombiniert, in Echtzeit automatisch bestimmt und bei Bedarf durch die Maschinensteuerung über den Dispatcher bzw. den Cockpitbetreiber verändert.

Schlussfolgernd dadurch ist es möglich, durch die zeitnahe Erfassung der Gewichtsdaten und der Geodaten eine Maschine 13 zu stoppen, zu rapportieren oder eine Rapportierung der Massenbewegung einzuleiten. Der Verfahrensablauf bildet damit ein geschlossenes System, was insbesondere durch den Prozessrechner 12 und seiner integrierten Software in Form eines Rechners und vorgegebenen Regelparamatern einen Ist- /Soll-Wert-Angleich ausführt, was eine erhöhte Effizienz der Produktabläufe - insbesondere die Bewegung von Schüttgütern - darstellt.

Das erfindungswesentliche Verfahren bietet diverse Anwendungsmöglichkeiten, zum Beispiel eine mögliche Koordinierung der Bewegungsdaten und der Gewichtsdaten bei einer Anwendung eines Radladers für eine Rütteldruckverdichtung. Insbesondere dabei wird die entsprechende Wiegemessung zur Erfassung der Massedaten verglichen mit der tatsächlich eingebrachten Schüttmasse und der vorgegebenen Schüttmasse in ein Rüttelloch, wobei gleichzeitig durch die GPS-Auswertung der beste Fahrweg zum Rüttelloch hin festgelegt wird und gleichzeitig eine Information enthält, dass der beladene Radlader nicht zu dicht an das Rüttelloch heranfährt, um ein Abfallen bzw. ein Abkippen des Radladers in den schwierigen Randbereich zu verhindern. Dabei werden die entsprechenden Signale dem Bedienpersonal im Cockpit übermittelt, welche vorher durch den Auswertprozess und der gegebenen Software im Reglerprozess festgelegt werden.

Wichtig ist dabei, dass die tatsächliche Lastbewegung hin zu dem Rüttelloch festgehalten wird. Über den GPS-Nachweis wird erreicht, dass der Radlader in dem randnahen Gebiet des gefährdeten Rüttelloches gesteuert werden kann und somit der Betreiber des Radladers im Cockpit jeweils ein Signal erhält, wann und wo er das entsprechende Schüttgut abladen muss.

Diese Kombination aus tatsächlichen Daten und über die Software eingebrachten Daten werden im Regelprozess im Prozessrechner 12 analysiert und ausgegeben und als Ist-Werte i und Leitwerte dem Cockpitfahrer mitgeteilt. Darin ist der wesentliche Unterschied zum Stand der Technik gegeben, da hier tatsächliche Werte aus dem Wiegeprozess und dem GPS-Prozess analysiert, mit vorgegebenen Richtwerten verglichen und an den jeweiligen Betreiber des Radladers überbracht werden.

### Bezugszeichen

- 1: Gewichtsmesssensor
- 1.1: Messbereichssensor
- 1.2: Messbereichssensor
- 1.3: digitaler Drucksensor
- 2: Bedienkonsole Cockpit
- 3: GPS-Sensor mit Antenne
- 4: DFÜ-Sende- und Empfangseinheit
- 5: MGW-Regelsystem
- 6: Radlader
- 7: Verladepunkt
- 8: Schüttgut
- 8': Schüttgut
- 8": Schüttgut
- 9: Leitstelle
- 10: Fernübertragung
- 11: Datenlogger
- 12: Prozessrechner
- 13: Maschine

- i: Ist-Wert
- s: Soll-Wert
- x: Regelgröße
- y: Stellgröße
- w: Führungsgröße

## Patentansprüche

1. Verfahren zum Steuern von Maschinen, welche Stück- und Schüttgüter transportieren, wobei ein prozessgeführtes Leitsystem, welches Ist- und Soll-Werte verarbeitet und auswertet und dabei prozessgeführt einzelne Verfahrensabläufe signalgesteuert ausführt, wobei die Erfassung von GPS-Daten und Gewichtsdaten des Stück- und Schüttguttransportes ermittelt wird, **dadurch gekennzeichnet, dass** Ist-Werte, wie die Georeferenzierung via GPS und die dazugehörige zeitliche Kodierung, ermittelt werden und weiterhin die Ist-Werte der mobilen Wiegemessdaten von Stück- und Schüttgutmassen bei den Maschinen über Sensoren, welche die Wiegemessdaten ermitteln, gemessen werden, die Daten in einen Datenlogger (11) gespeichert und nachfolgend in einen Prozessrechner (12) einem Regelprozess unterworfen werden und Verfahrensabläufe als Ausgangssignal an der Maschine (13) als Soll-Werte (s) und an der Bedienkonsole Cockpit (2) angezeigt werden und nachfolgend Einfluss auf die Wegstrecke der Maschine (13) sowie die Überwachung und Steuerung der Stück- und Schüttgutmassen nimmt.

2. Verfahren nach Anspruch 1 **dadurch gekennzeichnet, dass** ein mobiles georeferenziertes Wiegen mit einer entsprechenden zeitlichen Kodierung von Stück- und Schüttgütern aller Art in Intervallen < 15 Minuten ausgeführt wird.

3. Verfahren nach Anspruch 1 **dadurch gekennzeichnet, dass** eine getriggerte automatische Datenfernübertragung von georeferenzierten Wiegemessdaten bei Aufenthalt und Erreichung eines definierten Bereiches ausgeführt wird.
